# EUROPEAN PATENT APPLICATION

(11) **EP 0 632 092 A1**
(43) Date of publication of application: **04.01.1995**
(21) Application number: 94304874.4
(22) Date of filing: 04.07.1994
(51) Int. Cl.: C08K 5/34, C08L 23/02

(54) **Synergistic combination of UV light stabilizers for use with organic polymers**

(30) Priority: 02.07.1993 US 86711
(71) Applicant: BAYSHORE INDUSTRIAL, INC., LaPorte, Texas 77512 (US)
(72) Inventor: Bourbonais, Edward A., Houston, Texas 77059 (US)
(74) Representative: Harrison, David Christopher

(57) **Abstract**

U.V. light stabilizer combinations comprising (a) an aliphatic piperidinyl derivative, and (b) a high molecular weight hindered amine light stabilizer. The combinations are especially effective for stabilizing polyolefins that are extruded into thin films or fibers.

## Description

The present invention pertains broadly to hindered amine light stabilizers. The invention more particularly concerns mixtures of hindered amines which display coactive or synergistic properties in their ability to light stabilize organic polymers. The invention is especially attractive for use with polyolefins, notably in thin films, fibers and the like.

It is well known that sunlight and other sources of ultraviolet radiation cause degradation of organic polymers as evidenced by embrittlement or yellowing of plastic articles produced from such polymers. It is also well known to incorporate ultra-violet light stabilizers into such articles in an effort to inhibit such degradation. Many ultra-violet light stabilizers are currently commercially available for this purpose. These include, for example, those common ultra-violet light stabilizers listed in the following U.S. Patents: U.S. Patent No. 4,331,586, issued to Hardy; U.S. Patent No. 4,863,981, issued to Gugumus; and U.S. Patent No. 5,021,485 issued to Gugumus.

Hardy discloses oligomers of the formula 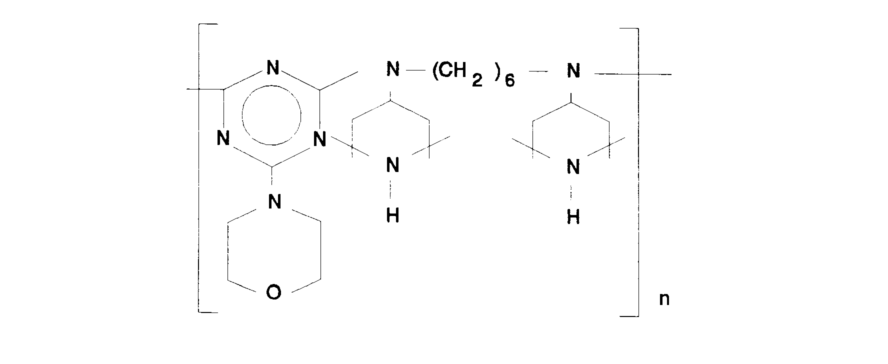
which contain at least one piperidinyl moiety in the repeating unit and are useful as light stabilizers for polymers. This group of compounds or formula is identified as Formula III of the instant invention.

Gugumus '981 discloses a light stabilizer system containing two high-molecular weight polyalkylpiperidines. This system is used to protect organic material against degradation induced by light. Gugumus discloses Formulas II and IV of the instant invention.

Gugumus '485 discloses a light stabilizer system containing a combination of specific low molecular weight and high molecular weight polyalkylpiperidines. This system is used to protect organic materials against light induced degradation.

Currently available light stabilizers such as those mentioned above have met with mixed success in inhibiting polymers against degradation. Synthetic polymers are produced in a wide variety of forms and applications, and the aforementioned compounds satisfactorily stabilize only a few variations. For example, very few low molecular weight light stabilizers are effective for polyolefins, especially when these polymers are extruded into thin film or fibers. In this instance, the low molecular weight stabilizers tend to flash off during the extrusion process.

Relatively high molecular weight light stabilizers are less volatile than low molecular weight stabilizers, but the high molecular weight light stabilizers sometimes tend to lack the mobility necessary to properly stabilize certain polymeric applications. Thus, there remains a need for new stabilization substances which are more versatile than the existing compounds.

The present invention addresses the above problems by means of a light stabilizer comprising a mixture of at least one aliphatic derivative of piperidine and at least one other high molecular weight hindered amine capable of providing light stabilization to organic polymers. The aliphatic derivative of piperidine preferably comprises a piperidinyl ester of an aliphatic carboxylic acid. Especially preferred are polyalkyl piperidinyl esters of aliphatic acids containing between eleven and twenty-three carbon atoms. Preferred examples of such esters are the 2, 2, 6, 6-tetramethyl-4 ester of a mixture of carboxylic acids.

The other hindered amine component or components of the mixtures of the invention may be selected from a variety of hindered amines that possess the invention are polymers which are extruded to form films, fibers and other relatively thin structures. Other hindered amines which have shown at least some capacity to light stabilize such polymers include one or more piperidinyl groups in the repeating units of polymers. The stabilizing ability of these other hindered amines is greatly augmented by the presence of the aliphatic piperidinyl derivatives mentioned earlier.

Other aspects of the invention include polymeric compositions stabilized by application of the stabilizing compositions of the invention, as well as methods employing such stabilizing compositions.

As stated above, the present invention relates to light stabilizer compositions which comprise mixtures of hindered amine light stabilizer ("HALS") compounds. One compound of the mixture comprises a piperidinyl derivative with an aliphatic chain having ten or more carbon atoms. A preferred group of such derivatives comprise the aliphatic ester derivatives of piperidine having the following formula: 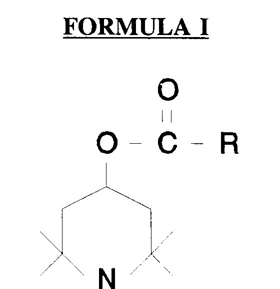
wherein R is an alkyl or alkenyl group having from eleven to twenty-three carbon atoms.

A compound according to Formula I, or any other aliphatic piperidinyl derivative, is combined with one or more monomeric or polymeric hindered amine light stabilizers of relatively high molecular weight. For purposes of this invention, "high molecular weight" means a monomer or polymer having a weight of about 1000 or more. The resulting mixture of light stabilizers is much more versatile than existing stabilizers, and is particularly useful in stabilizing polyolefins which are extruded into thin film or fibers.

Some common illustrative compounds that may be combined with the aliphatic piperidinyl derivatives of the invention to produce the synergistic mixtures of the present invention are as follows: 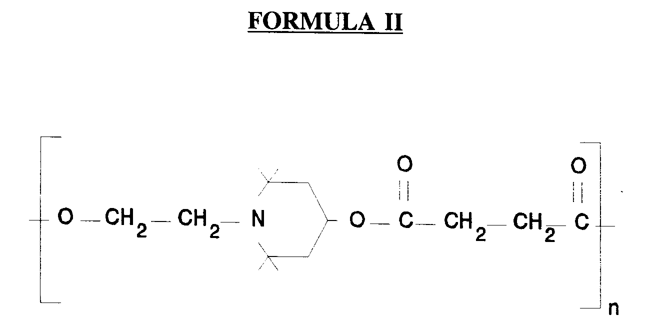
wherein n is an integer from 4 to 20; 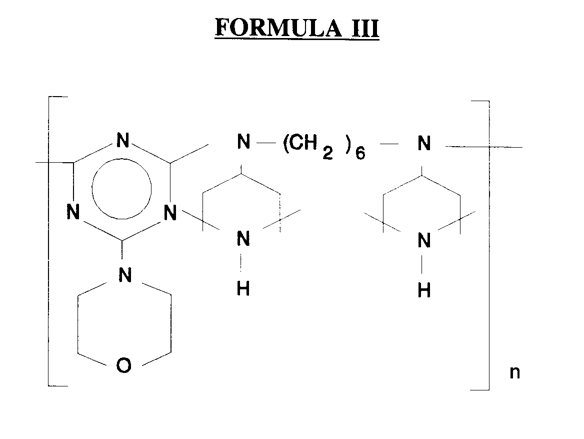
wherein n is an integer from 4 to 20; 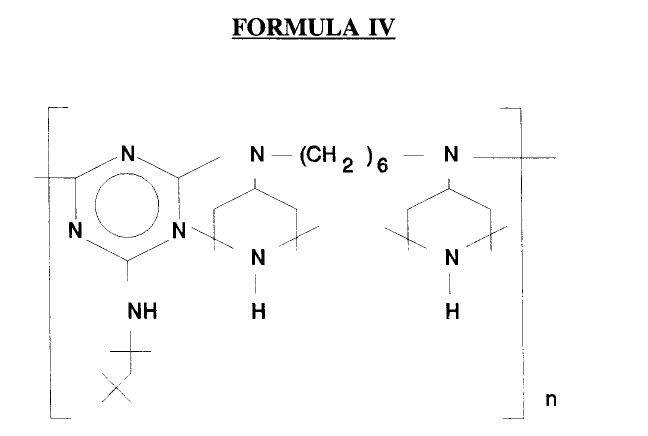
wherein n is an integer from 4 to 20; and 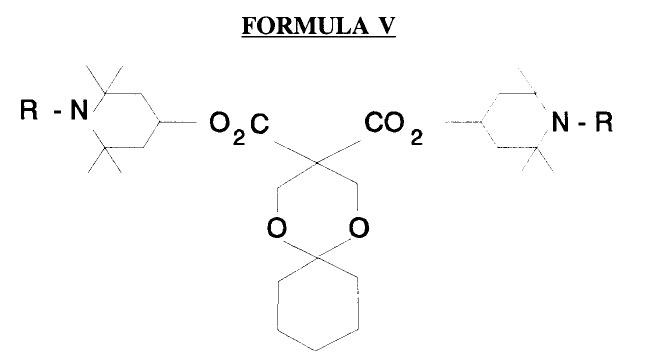
wherein R is a H, hydroxyl, benzyl, alkenyl, alkyd, oxyl or alkyl group. The alkyd, oxyl, alkenyl, and alkyl groups preferably have from 1 to 8 carbons.

The above compounds are presented as examples, and should not be considered limitations to the present invention.

Aliphatic piperidinyl derivatives, according to Formula I of this invention, may be prepared by acylating a piperidinol with an aliphatic acid. A preferred derivative is obtained by acylating 2,2,6,6-tetramethylpiperidin-4-ol with a mixture of carboxylic acids. A preferred group of such acid mixtures is given by the following table:

| | **Carboxylic Acid Components** | **Wt.** **%** |
|---|---|---|
| a) | CH₃(CH₂)₁₆-CO₂H | 40-65 |
| b) | CH₃(CH₂)₁₄-CO₂H | 31-49 |
| c) | CH₃(CH₂)₁₅-CO₂H | 0.3-4.8 |
| d) | CH₃(CH₂)₁₂-CO₂H | 0.1-3.0 |
| e) | CH₃(CH₂)₇CH=CH(CH₂)₇-CO₂H | 0.2-4.0 |
| f) | CH₃(CH₂)₁₁₋₂₀-CO₂H | 0.2-6.2 |

Acylating 2,2,6,6,-tetramethylpiperidin-4-ol with a carboxylic acid listed above yields the following reaction: 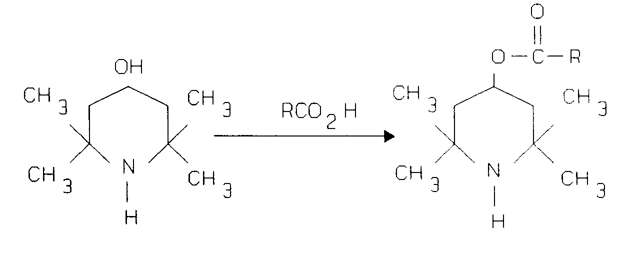
One Formula I product is commercially available as UV-3853 produced by American Cyanamid Co.

Compounds according to Formulas II and IV of this invention are known light stabilizers and may be prepared by known processes. U.S. Patent Nos. 4,233,412 and 4,086,204, both of which are incorporated herein by reference, describe conventional methods for making these compounds. These compounds are also commercially available from Ciba Geigy Corp. under the trade names of Tinuvin® 622 and Chimassorb® 944, respectively.

Compounds according to Formula III of this invention may be prepared according to the process disclosed in U.S. Patent No. 4,331,586 (Hardy), which is incorporated herein by reference. One such product is commercially available as Cyasorb UV-3346 produced by American Cyanamid Co.

Compounds according to Formula V may be prepared according to the process disclosed in U.S. Patent No. 4,701,485 issued to Nelson et al., which is incorporated herein by reference. One such product is commercially available as Topanex 500 produced by ICI Americas, Inc.

The combination of an aliphatic piperidinyl derivative with a high molecular weight HALS has been found to produce very desirable coactive or synergistic effects of the present invention. These particular mixtures of hindered amine compounds produce more versatile organic polymer light stabilizers in that the blends provide a better balance of color, light, and thermal stability to the organic polymer. The presence of the mixtures also provides greater processing stability to the organic polymers, in that such mixtures are able to withstand higher temperatures than polymers containing other low molecular weight hindered amines. This becomes especially important when a polymer containing such a mixture is extruded or otherwise shaped into its final form.

The coaction or synergism occurs especially in polymers of olefins such as ethylene, propylene, butylenes; their copolymers; and mixtures thereof. The coaction or synergism is particularly noteworthy in polypropylene, especially when extruded into thin films or fibers. It is considered that the addition of an aliphatic piperidinyl derivative such as the Formula I compound to a stabilizer mixture of the invention provides a long alkyl or alkenyl chain which blends with the polyolefin and helps to prevent the flashing off of the stabilizers during extrusion. In addition, the presence of the relatively low molecular weight piperidinyl derivative helps provide the mobility lacking in high molecular weight HALS.

Besides the compounds mentioned herein, many more monomeric or polymeric HALS are available which may also be combined with the aliphatic piperidinyl derivatives to practice the present invention. The ratio by weight of aliphatic piperidinyl derivatives to the other HALS compounds specified above preferably should be in the range between about 0.02: 5.0 and about 5.0:0.02, especially in the range between about 0.05:1.5 and about 1.5:0.05. One skilled in the art will recognize that these ratios may vary somewhat, depending upon the particular compounds used, and the particular polymer to be stabilized, and the form of the final product.

The amount of a light stabilizer mixture of the invention that may be added to a polymer is preferably from about 0.02% to about 5.0% by weight. Factors that help determine the amount of light stabilizer to be utilized include the intended lifetime of the end use article or polymer; the thickness or diameter of the polymer; the types of other additives incorporated; the composition and/or type of polymer; and the processing conditions and/or processing equipment.

The light stabilizers of the invention may be used in combination with fillers and additional stabilizers including antioxidants, metal deactivators, phosphites and phosphonites, compounds which destroy peroxides, polyamide stabilizers, basic co-stabilizers, nucleating agents, flame retardant stabilizers, antislip and antistatic agents, supplemental light stabilizers, ultraviolet absorbers, pigments, dyes, lubricants, and the like.

Suitable fillers and reinforcing agents include calcium carbonate, silicates, glass fibers, asbestos, talc, kaolin, mica, barium sulfate, metal oxides and hydroxides, carbon black and graphite.

Suitable antioxidants include those of the hindered phenol type such as 2,6-di-t-butyl-p-cresol; 4,4'-bis(2,6-di-t-butylphenol); 4,4'-bis(2,6-diisopropylphenol); 2,4,6-tri-t-butylphenol; 2,2'-thiobis (4-methyl-6-t-butylphenol); octadecyl-2(3',5'-di-t-butyl-4'-hydroxyphenyl)-propionate: pentaerythritol tetrakis (3,5-di-t-butyl-4-hydroxyphenyl) propionate 1,3,5-tris(3',5'-di-t-butyl-4-hydroxybenzyl) isocyanurate; 1,3,5-tris((3',5'-di-t-butyl-4'-hydroxyphenyl) proprionate) isocyanurate; 1,3,5-tris(3,5'-di-t-butyl-4'-hydroxybenzyl)-2,4,6-dimethylbenzyl)-s-triazine-2,4,6-(1H,3H,5H)-trione and esters of thiodipropionic acid such as dilaurylthiodipropionate and distearylthiodipropionate etc.; hydrocarbyl phosphites such as triphenyl phosphite, trinonyl phosphite, didodecyl pentaerythritol diphosphite, diphenyldecyl phosphite, tris-(2,4-di-t-butylphenyl)phosphite, bis(2,4-di-t-butylphenyl)pentaerythritol diphosphite, etc. and combinations thereof.

Metal deactivators that may be used in connection with the instant invention include N,N'diphenyloxamide,N-salicylal-N'-salicylohydrazine, N,N'-bis-(salicycloyl)-hydrazine, N,N'-bis-(3,5-di-tert-buty-4-hydroxyphenylpropionyl)hydrazine, 3-salicyloylamino-1,2,4-triazole and bis-(benzylidene)-oxalic acid dihydrazide.

Examples of suitable phosphites and phosphonites include triphenyl phosphite, diphenyl alkyl phosphites, phenyl dialkyl phosphites, tri(nonylphenyl)phosphite, trilaurylphosphite, trioctadecylphosphite, distearyl pentaerythritol diphosphite, tris-(2,4-di-tert-butylphenyl)phosphite, diisodecyl pentaerythritol diphosphite, bis-(2,4-ditert-butylphenyl)pentaerythritol diphosphite, tristearyl sorbitol triphosphite, tertakis-(2,4-di-tert-butylphenyl) 4,4'-biphenylenediphosphonite and 3,9-bis-(2,4-di-tert-butylphenoxy)-s,4,8,10-tetrapxa-3,9-di-phosphaspiro[5.5]undecane.

Compounds which destroy peroxides that may be used include esters of β-thiodipropionic acid, for example the lauryl, stearyl, myristyl or tridecyl ester, mercaptobenzimidazole, the zinc salt of 2-mercaptobenzimidazole, zinc dibutyldithiocarbamate, dioctadecyl disulfide and pentaerythritol tetrakis-(β-dodecylmercapto)-propionate.

Suitable polyamide stabilizers include copper salts in combination with iodides and/or phosphorus compounds and salts of divalent manganese.

Examples of basic co-stabilizers include melamine, polyvinylpyrrolidone, dicyanodiamide, triallyl cyanurate, urea derivatives, hydrazine derivatives, amines, polaymides, polyurethanes, alkali metal and alkaline earth metal salts of higher fatty acids, for example calcium stearate, magnesium stearate, sodium ricinoleate or potassium palmitate, antimony pyrocatecholate or tin pyrocatecholate.

Examples of nucleating agents that may be used include 4-tert-butylbenzoic acid, adipic acid and diphenylacetic acid.

Suitable supplemental light stabilizers include those of the benzotriazole class, such as 2-(2-hydroxy-5-t-octylphenyl)benzotriazole; 2,(2'-hydroxy-3',5'-di-t-butyl-phenyl)-5-chlorobenzotriazole; 2-(2'-hydroxy-5'-methylphenyl)benzotriazole; 2-(2'-hydroxy-3'-t-butyl-5'-methylphenyl)-5-chlorobenzotriazole; 2-(2'-hydroxy-5'-t-butylphenyl)benzotriazole; 2-(2'-hydroxy-3',5'-di-t-amylphenyl)-benzotriazole; those of the hydroxybenzophenone type such as 2-hydroxy-4-methoxybenzophenone; 2-hydroxy-4-octyloxybenzophenone; 2,2'-dihydroxy-4,4'-di-methoxybenzophenone; hindered phenol esters, such as n-hexadecyl-3,5-di-t-butyl-4-hydroxybenzoate, and 2',4'-di-t-butylphenol-3, 5-di-t-butyl-4-hydroxybenzoate; metal complexes such as nickel complexes of 2,2'-thiobis(4-6-octylphenol), nickel butylamine complexes of 2,2'-thiobis(4-6-octylphenol), nickel butylamine complexes of 2,2'-thiobis(4-t-octylphenol); nickel complexes of bis(4-t-octyl-phenol)sulphone; nickel dibutyl thiocarbamate; nickel salts of 4-hydroxy-3,5-di-t-butylbenzylphosphonic acid monoalkyl esters where alkyl is methyl, ethyl, propyl, butyl etc.; nickel complexes of 2-hydroxy-4-methylphenyl undecylketoneoxime.

Ultraviolet absorbers and light stabilizers that may be added include derivatives of 2-(2'hydroxyphenyl)-benzotriazoles such as the 5'-methyl, 3',5'-di-tert-butyl, 5'-tert-butyl, 5'-(1,1,3 3-tetramethylbutyl), 5-chloro-3', 5'-di-tert.-butyl, 5-chloro-3'-tert.-butyl-5'-methyl, 3'-sec.butyl-5'-tert.butyl, 4'-octoxy, 3',5'-di-tert.amyl or 3'5'-bis-(α,α-dimethylbenzyl) derivative.

Derivatives of 2-hydroxybenzophenones may also be used as ultraviolet absorbers. Examples of such compounds include 4-hydroxy, 4-methoxy, 4-octoxy, 4-decycloxy, 4-dodecyloxy, 4-benzyloxy, 4,2',4'-trihydroxy and 2'-hydroxy-4,4'-dimethoxy derivatives.

Examples of other ultraviolet absorbers include esters of substituted or unsubstituted benzoic acids. Examples of such compounds include 4-tert.-butylphenyl salicylate, phenyl salicylate, octyphenyl salicylate, dibenzoylresorcinol, bis-(4-tert.-butylbenzoyl)-resorcinol, benzoylresorcinol, 2,4-di-tert.-butylphenyl, 3,5-di-tert.-butyl-4-hydroxybenzoate and hexadecyl 3,5-di-tert.-butyl-4-hydroxybenzoate.

Acrylates may also be used as ultraviolet absorbers and light stabilizers. Examples of such compounds include ethyl or isooctyl α-cyano-β,β-diphenylacrylate, methyl α-carbomethyoxycinnamate, methyl or butyl α-cyano-β-methyl-p-methoxycinnamate, methyl α-carbomethoxy-p-methoxy cinnamate and N-(β-carbomethoxy-β-cyanovinyl)-2-methylindoline.

Nickel complexes of 2,2'-thiobis-[4-(1,1,3,3-tetra-methylbutyl)-phenol] may also be utilized. Such compounds include the 1:1 or 1:2 complex, if appropriate containing additional ligands, such as n-butylamine, triethanolamine or N-cyclohexyldiethanolamine, nickel dibutyl-dithiocarbamate, nickel salts of monoalkyl esters of 4-hydroxy-3,5-di-tert.-butylbenzylphosphonic acid, such as the methyl or ethyl ester, nickel complexes of ketoximes, such as 2-hydroxy-4-methylphenylundecyl ketone oxime and nickel complexes of 1-phenyl-4-lauroyl-5-hydroxypyrazole, if appropriate containing additional ligands.

Sterically hindered amines, for example, bis-(2,2,6,6-tetra-methylpiperidyl)sebacate,bis(1,2,2,6,6-pentamethylpiperidyl)sebacate, bis(1,2,2,6,6-pentamethylpiperidyl) n-butyl-3,5-di-tert.-butyl-4-hydroxybenzylmalonate, the condensation product formed from 1-hydroxyethyl-2,2,6,6-tetramethyl-4-hydroxypiperidine and succinic acid, the condensation product formed from N,N'-bis-(2,2,6,6,-tetra-methyl-4-piperidyl)-hexamethylenediamine and 4-tert.-octylamino-2,6-dichloro-1,3,5-s-triazine, tris-(2,2,6,6-tetramethyl-4-piperidyl)nitrilotriacetate, tetrakis-(2,2,6,6-tetramethyl-4-piperidyl) 1,2,3,4-butanetetraoate and 1,1'-(1,2-ethanediyl)-bis-(3,3,5,5-tetramethylpiperazinone) are additional examples of ultraviolet absorbers and light stabilizers.

Finally, oxamides, for example, 4,4'-dioctyloxyoxanilide, 2,2'-dioctyloxy-5,5'-di-tert.-butyloxanilide, 2,2'-didodecyloxy-5,5'-di-tert.-butyloxanilide, 2-ethoxy-2'-ethyloxanilide, N,N'-bis(3-dimethylaminopropyl)-oxamide, 2-ethoxy-5-tert.-butyl-2'-ethyloxanilide and a mixture thereof with 2-ethoxy-2'-ethyl-5,4'-di-tert.-butyloxanilide and mixtures of o- and p-methoxy-disubstituted and o- and p-ethoxy-disubstituted oxanilides may be added to compounds of the instant invention.

The combinations of this invention may be used for stabilizing organic polymers, in particular against light-induced degradation. Examples of such polymers are the following classes, with the first three classes being particularly suitable to take advantage of the coaction or synergy of the mixture.
1. Polymers of monoolefins and diolefins, for example polypropylene, polyisobutylene, polybut-1-ene, polymethylpent-1-ene, polyisoprene or polybutadiene, polyethylene (which can be uncrosslinked or crosslinked), for example high density polyethylene, low density polyethylene and linear low density polyethylene, as well as polymers of cycloolefins, for example of cyclopentene or norbornene,
2. Mixtures of the polymers mentioned under number 1, for example mixtures of polypropylene with polyisobutylene, polypropylene with polyethylene and mixtures of different types of polyethylene or mixtures of polypropylene with ethylene/ propylene/diene terpolymers.
3. Copolymers of monoolefins and diolefins with each other or vinyl monomers, such as, ethylene/propylene copolymers, linear low density polyethylene with low density polyethylene, propylene/but-1-ene copolymers, ethylene/hexene copolymers ethylene/methylpentene copolymers, ethylene/heptene copolymers, ethylene/octane copolymers, propylene/butadiene copolymers, isobutylene/isoprene copolymers, ethylene/alkyl acrylate copolymers, ehtylene/alkyl methacrylate copolymers, ethylene/vinyl acetate or ethylene/acrylic acid copolymers and their salts, as well as terpolymers of ethylene with propylene and a diene such as hexadiene, dicyclopentadiene or ethylidenenorbornene; and also mixtures of such copolymers with each other and with the polymers mentioned under number 1 above, for example polypropylene/ethylene-propylenecopolymers.
4. Polystyrene, poly-(p-methylstyrene), poly-(α-methylstyrene).
5. Copolymers of styrene or α-methylstyrene with dienes or acrylic derivatives, for example styrene/butadiene, styrene/ acrylonitrile, styrene/alkylmethacrylate, styrene/butadiene/ alkylacrylate, styrene/maleic anhydride, styrene/acrylonitrile/ methyl acrylate; mixtures of high impact strength from styrene copolymers and another polymer, for example from a polyacrylate, a diene polymer or an ethylene/propylene/diene terpolymer; and block copolymers of styrene, for example styrene/butadiene/ styrene, styrene/isoprene/styrene, styrene/ethylene/butylene/ styrene or styrene/ethylene/propylene/styrene.
6. Graft copolymers of styrene or a-methylstyrene for example styrene on polybutadiene, styrene on polybutadiene/ styrene or polybutadiene/acrylonitrile; styrene and acrylonitrile (or methacrylonitrile) on polybutadiene; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymer; styrene and acrylonitrile on polyacrylates or polymethacrylates, styrene and acrylonitrile on acrylate/butadiene copolymers, as well as mixtures thereof with the copolymers listed under 5.
7. Halogenated polymers such as polychloroprene, chlorinated rubbers, chlorinated or sulfochlorinated polyethylene, epichlorohydrin homo- and copolymers, polymers of halogenated vinyl compounds, for example, polyvinylchloride, polyvinylidene chloride, polyvinyl fluoride, polyvinylidene fluoride, as well as copolymers thereof, for example vinyl chloride/vinylidene chloride, vinyl chloride/vinyl acetate or vinylidene chloride/vinyl acetate copolymers.
8. Polymers derived from α,β-unsaturated acids and derivatives thereof, such as polyacrylates and polymethacrylates, polyacrylamides and polyacrylonitriles.
9. Copolymers of the monomers mentioned under 8 with each other or with other unsaturated monomers.
10. Polymers derived from unsaturated alcohols and amines or the acyl derivatives or acetals thereof, such as polyvinyl alcohol, polyvinyl acetate, polyvinyl stearate, polyvinyl benzoate, polyvinyl maleate, polyvinylbutyrate, polyallyl phthalate or polyallylmelamine; as well as their copolymers with the olefins mentioned in 1 above.
11. Homopolymers and copolymers of cyclic ethers such as polyalkylene glycols, polyethylene oxide, polypropylene oxide or copolymers thereof with bisglycidyl ethers.
12. Polyacetals such as polyoxymethylene and those polyoxymethylenes which contain ethylene oxide as a comonomer; polyacetals modified with thermoplastic polyurethanes, acrylates or MBS.
13. Polyphenylene oxides and sulfides, and mixtures of polyphenylene oxides with polystyrene or polyamides.
14. Polyurethanes which are derived from polyethers, polyesters or polybutadienes with terminal hydroxyl groups on the one hand and aliphatic or aromatic polyisocyanates on the other side, as well as precursors thereof.
15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene, diamine and adipic acid; polyamides prepared from hexamethylene diamine and isophthalic and/or terephthalic acid and optionally an elastomer as modifier, for example poly-2,4,4,-trimethylhexamethylene terephtalamide or poly-m-phenylene isophthalamide. Further copolymers of the aforementioned polyamides with polyolefins, olefin copolymers, ionomers or chemically bonded or grafted elastomers; or with polyethers, for example with polyethylene glycol, polypropylene glycol or polytetramethylene glycol.
16. Polyureas, polyimides and polyamide-imides and polybenzimidazoles.
17. Polyesters derived from dicarboxylic acids and diols and/or from hydroxycarboxylic acids or the corresponding lactones, such as polyethylene terephthalate, polybutylene terephthalate, poly-1,4-dimethylolcyclohexane terephthalate, polyhydroxybenzoates as well as block-copolyether esters derived from hydroxyl-terminated polyethers; and also polyesters modified with polycarbonates or MBS.
18. Polycarbonates and polyester carbonates.
19. Polysulfones, polyether sulfones and polyether ketones.
20. Crosslinked polymers which are derived from aldehydes on the one hand and phenols, ureas and melamines on the other hand, such as phenol/formaldehyde resins, urea/formaldehyde resins and melamine/formaldehyde resins.
21. Drying and non-drying alkyd resins.
22. Unsaturated polyester resins which are derived from copolyesters of saturated and unsaturated dicarboxylic acids with polyhydric alcohols and vinyl compounds as crosslinking agents, and also halogen-containing modifications thereof of low inflammability.
23. Crosslinkable acrylic resins derived from substituted acrylic esters, such as epoxyacrylates, urethaneacrylates or polyesteracrylates.
24. Alkyd resins, polyester resins or acrylate resins which are crosslinked with melamine resins, urea resins, polyisocyanates or epoxy resins.
25. Crosslinked epoxy resins which are derived from polyepoxides, for example from bisglycidyl ethers or from cycloaliphatic diepoxides.
26. Natural polymers such as cellulose, rubber, gelatine and chemically modified homologous derivatives thereof such as cellulose acetates, cellulose propionates and cellulose butyrates, or the cellulose ethers, such as methylcellulose; rosins and their derivatives.

The addition of the stabilizer combination may be made before, during or after the preparation of the polymers, and may be effected by known methods. For example, before or during shaping or by applying the compounds, in solution or in dispersion, to the organic material, with or without subsequent removal of the solvent by evaporation. The components of the stabilizer mixture according to this invention may also be added to the materials to be stabilized in the form of a master-batch, containing the stabilizer mixture in a concentration of from about 1.0% to 25% by weight.

The stabilized materials may be used in a very wide variety of shapes or forms, for example as sheeting films, fibers, tapes, molding materials, etc. As stated above, the coactive or synergistic effect of the invention mixture produces a light stabilizer compound which is especially effective for use with polyolefins, particularly polypropylene, polyethylene and copolymers thereof, and particularly when such polymers are extruded into thin films or fibers.

## Claims

1. A light stabilizer for organic polymers comprising a mixture of:
(a) at least one aliphatic piperidinyl derivative; and
(b) at least one other hindered amine capable of providing light stabilization to organic polymers.

2. A stabilizer according to claim 1 wherein the aliphatic piperidinyl derivative has the formula: 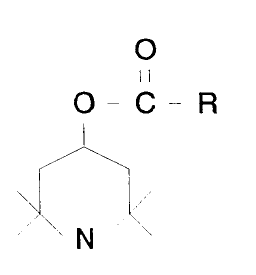 wherein R is a C₁₁₋₂₃ alkyl or alkenyl group.

3. A stabilizer according to claim 1 or claim 2 wherein at least one of the other hindered amine compounds has the following formula: 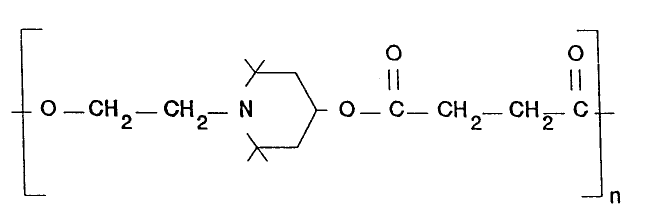 wherein n is an integer from 4 to 20.

4. The stabilizer according to claim 1 or claim 2 wherein at least one of the other hindered amine compounds has the following formula: 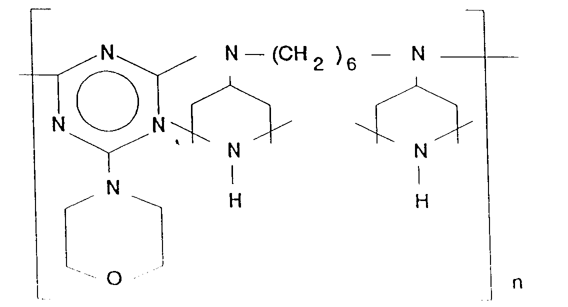 wherein n is an integer from 4 to 20.

5. The stabilizer according to claim 1 or claim 2 wherein at least one of the other hindered amine compounds has the following formula: 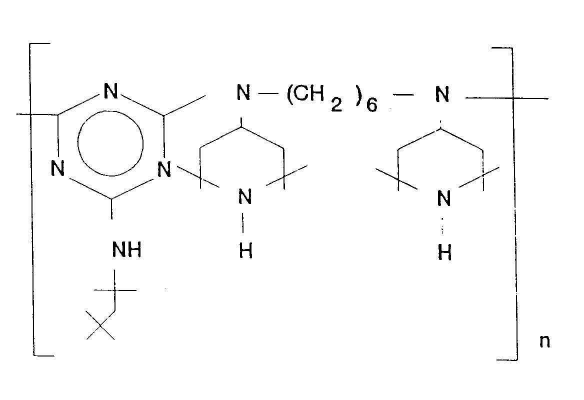 wherein n is an integer from 4 to 20.

6. The stabilizer according to claim 1 or claim 2 wherein at least one ofthe other hindered amine compounds has the following formula: 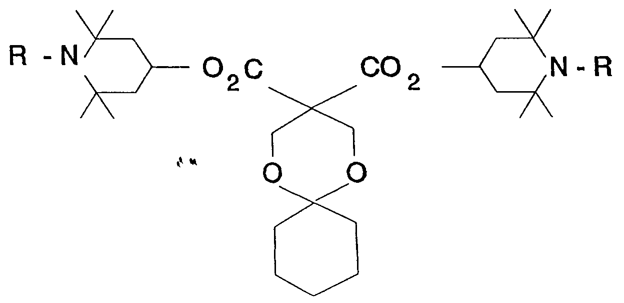 wherein R is a H, benzyl, hydroxyl or C₁-C₈ alkyl, oxyl, alkenyl or alkyd group.

7. A composition of matter containing an organic polymer subject to degradation induced by light, stabilized with an effective amount of a stabilizer mixture according to any one of claims 1-6.

8. A method for stabilizing a polyolefin against degradation induced by light, which comprises adding to the polyolefin a stabilizing amount of a light stabilizer comprising a mixture according to any one of claims 1-6.

9. A method for stabilizing thinly extruded polypropylene, polyethylene, or copolymers thereof, against degradation induced by light which comprises adding to the polymer a stabilizing amount of a light stabilizer comprising a mixture according to any one of claims 1-6.
